# EUROPÄISCHE PATENTSCHRIFT

(11) **EP 0 372 376 B1**
(45) Veröffentlichungstag und Bekanntmachung des Hinweises auf die Patenterteilung: **12.05.1993**
(21) Anmeldenummer: 89122051.9
(22) Anmeldetag: 29.11.1989
(51) Int. Cl.: F16H 21/40, B24B 23/04, B26B 7/00, B23Q 5/00

(54) **Oszillationsantrieb**
Oscillating device
Mécanisme d'entraînement oscillant

(30) Priorität: 06.12.1988 DE 3840974
(43) Veröffentlichungstag der Anmeldung: 13.06.1990
(73) Patentinhaber: C. & E. FEIN GmbH & Co., D-70176 Stuttgart (DE)
(72) Erfinder:
(74) Vertreter: Witte, Alexander, Dr.-Ing.

(56) Entgegenhaltungen:
- EP-A- 0 035 805
- DE-C- 143 844
- DE-U- 8 031 084
- US-A- 2 639 620
- US-A- 2 697 897
- US-A- 3 740 847
- Soviet Inventions Illustrated, Derwent Publications Ltd., Sektion Mechanik, Woche J47, Zusammenfassung, Nr.A1944, Q64, 12.Januar 1 & SU-A-896294 (PIVOVARENOK A M) 7.Januar 1982 .

## Beschreibung

Die Erfindung betrifft einen Oszillationsantrieb für Werkzeuge mit einer Antriebswelle, mit einem auf der Antriebswelle sitzenden Oszillationsantriebselement, mit einer mit ihrer Achse quer zur Antriebswelle ausgerichteten Abtriebswelle, und mit einem sich von der Abtriebswelle in Richtung des Oszillationsantriebselements erstreckenden Schwenkelement, wobei das Oszillationsantriebselement einen Exzenter aufweist, welcher über ein Verbindungsglied, umfassend ein Drehlager, kombiniert mit einem bezüglich einer Drehachse desselben allseitig kippbaren Kippgelenk, mit dem Schwenkelement verbunden ist, und wobei ein an dem Verbindungsglied angreifender Teil des Schwenkelements mit einer in einer durch die Achse der Abtriebswelle hindurch verlaufenden Ebene liegenden Richtungskomponente schwenkbar, im übrigen starr mit der Abtriebswelle verbunden ist.

Ein derartiger Oszillationsantrieb ist aus Soviet Inventions Illustrated, Sektion Mechanik, Woche J 47, Zusammenfassung No. A 1944 bekannt.

Der vorbekannte Oszillationsantrieb weist eine Antriebswelle mit einem auf der Antriebswelle sitzenden Oszillationsantriebselement auf, sowie eine mit ihrer Achse quer zur Antriebswelle ausgerichtete Abtriebswelle, welche mit einem sich von der Abtriebswelle in Richtung des Oszillationsantriebselements erstreckenden Schwenkelement gekoppelt ist. Das Oszillationsantriebselement weist einen Exzenter auf, welcher über ein Universalgelenk mit dem Schwenkelement verbunden ist. Ein an dem Universalgelenk angreifender Teil des Schwenkelements ist mit einer in einer durch die Achse der Abtriebswelle hindurch verlaufenden Ebene liegenden Richtungskomponente schwenkbar, im übrigen durch Führung des Teiles in Kulisse des Schwenkelements starr mit der Abtriebswelle verbunden. Das dem Universalgelenk gegenüberliegende Ende des Teiles ist über ein Kreuzgelenk an einer Hilfswelle gelagert, welche koaxial zur Antriebswelle angeordnet ist.

Der vorbekannte Oszillationsantrieb ist im wesentlichen als geometrisches Prinzip offenbart, ohne daß eine praktische Ausführung zum Antrieb eines Werkzeugs angegeben ist.

Ein weiterer Oszillationsantrieb ist aus der DE-80 31 084-U bekannt. Dieser Oszillationsantrieb ist so aufgebaut, daß das Schwenkelement eine Schwinge bildet, in welcher ein Kolben parallel zur Achse der Werkzeugantriebswelle verschieblich und außerdem noch um seine Verschiebeachse drehbar ist. Dieser Kolben wird von einem Exzenterzapfen durchsetzt und ist außerdem in Längsrichtung des Exzenterzapfens auf diesem verschieblich gelagert.

Der Nachteil dieses Oszillationsantriebs ist darin zu sehen, daß dieser - obwohl er zuverlässig funktioniert - aufgrund der vielen drehbaren und verschieblichen Lagerungen sehr aufwendig herzustellen und daher auch sehr teuer ist.

Der Erfindung liegt die Aufgabe zugrunde, einen Oszillationsantrieb für Werkzeuge zu schaffen, welcher kostengünstig und einfach herstellbar ist.

Diese Aufgabe wird bei einem Oszillationsantrieb der eingangs beschriebenen Art erfindungsgemäß dadurch gelöst, daß die Antriebswelle von einem Motor angetrieben ist, daß die Abtriebswelle als Werkzeugantriebswelle zum Antrieb eines Werkzeugs ausgebildet ist, und daß das Verbindungsglied ein Pendellager ist, welches an dem Exzenterelement gehalten ist.

Der Vorteil der erfindungsgemäßen Lösung ist darin zu sehen, daß diese Anordnung einfach herzustellen ist und daß mit dieser insbesondere auch große Drehmomente in einfacher Weise übertragen werden können. Weiterhin ist eine platzsparende Bauweise ermöglicht.

Da der erfindungsgemäße Oszillationsantrieb insbesondere mit hohen Drehzahlen und kleinen Schwenkwinkeln bei den Oszillationsbewegungen arbeiten soll, ist es auch nicht nötig, das Kippgelenk um einen großen Winkel kippbar zu machen, so daß vorteilhafterweise das Kippgelenk lediglich einen Kippwinkelbereich von maximal 10°, vorteilhafterweise maximal 5°, oder weniger aufweist.

Bei den bislang beschriebenen Ausführungsbeispielen wurde nicht näher darauf eingegangen, wie das Schwenkelement ausgebildet sein soll. Eine Möglichkeit, das Schwenkelement so auszubilden, daß dessen an dem Verbindungsglied angreifender Teil in der besagten, durch die Achse der Werkzeugantriebswelle hindurchverlaufenden Ebene schwenkbar ist, ist dann gegeben, wenn der an dem Verbindungsglied angreifende Teil Ges Schwenkelements um eine Schwenkachse gelenkig gelagert ist, denn dies stellt die konstruktiv einfachste Lösung für die Schwenkbarkeit dar.

Insbesondere um einfache geometrische Verhältnisse bei der Schwenkbewegung in Verbindung mit der Drehbewegung der Werkzeugantriebswelle zu erhalten, ist es zweckmäßig, wenn die Schwenkachse die Achse der Werkzeugantriebswelle schneidet. Damit kann nämlich erreicht werden, daß der an dem Verbindungsglied angreifende Teil des Schwenkelements, beispielsweise dessen mit dem Verbindungsglied zusammenwirkendes Ende, sich auf einer Kreisbahn bewegt, welche einen Schnitt einer Kugelfläche mit einer Ebene darstellt, wobei der Mittelpunkt der Kugelfläche der Schnittpunkt der Schwenkachse mit der Achse der Werkzeugantriebswelle ist. Diese geometrischen Verhältnisse lassen sich insbesondere vorteilhaft mit einem Kippgelenk kombinieren, welches, wie oben bereits als zweckmäßig erläutert, sämtliche Kippachsen in einer Ebene hat. In diesem Fall entstehen weder auf seiten des Kippgelenks noch auf seiten der Lagerung des Schwenkelements an der Werkzeugantriebswelle beim Bewegen des Oszillationsantriebs Änderungen im Abstand zwischen dem Schnittpunkt der Kippachsen des Kippgelenks und dem Schnittpunkt der Schwenkachse mit der Achse der Werkzeugantriebswelle, während diese Abstandsänderungen immer stets dann auftreten, wenn diese besagten Achsen sich nicht in einem Punkt schneiden. Im letztgenannten Fall muß dann zusätzlich noch ein Längenausgleich herbeigeführt werden, welcher einen zusätzlichen konstruktiven und herstellungstechnischen Aufwand erfordert.

Besonders einfach ist die vorstehend als vorteilhaft bezeichnete Lösung dann, wenn die Schwenkachse senkrecht auf der Achse der Werkzeugantriebswelle steht.

Besonders einfach ist es, wenn das Verbindungsglied in einer Ausnehmung des Exzenterelements aufgenommen ist, da diese Lösung sehr klein baut.

Eine konstruktiv besonders günstige Ausführungsform sieht vor, daß das Exzenterelement ein Rad ist, welches dann als Ausnehmung für das Verbindungsglied eine entsprechend exzentrisch angeordnete Bohrung aufweisen kann.

Bei allen Ausführungsbeispielen, bei welchem das Verbindungsglied an dem Exzenterelement gehalten ist, ist vorteilhafterweise die Konstruktion so gewählt, daß das Schwenkelement mit einem Zapfen in eine Aufnahme des Verbindungselements eingreift, so daß sich hierbei Vorteile beim Zusammenbau des erfindungsgemäßen Oszillationsantriebs ergeben, da das Schwenkelement lediglich in die Aufnahme eingesteckt werden muß.

Anstelle einer gelenkigen Lagerung des an dem Verbindungsglied angreifenden Teils des Schwenkelements, insbesondere des gesamten Schwenkelements an der Werkzeugantriebswelle, kann bei einer noch einfacheren Ausführungsform der erfindungsgemäßen Lösung vorgesehen sein, daß das Schwenkelement unbeweglich mit der Werkzeugantriebswelle verbunden ist und daß das Schwenkelement zumindest teilweise aus in der durch die Achse der Werkzeugantriebswelle hindurchverlaufenden Ebene elastisch beweglichem Material ist. Somit erspart man sich durch diese Ausbildung des Schwenkelements ein Gelenk.

Die einfachste Möglichkeit, das Schwenkelement dergestalt auszubilden, ist die, daß dieses ein Federstahlplättchen umfaßt, bei welchem insbesondere dessen Schmalseite parallel zu der durch die Achse der Werkzeugantriebswelle hindurchverlaufenden Ebene verläuft und dessen Breitseite senkrecht auf dieser Ebene steht.

Hinsichtlich der Form des Schwenkelements selbst wurden bislang keine weiteren Angaben gemacht. So ist vorteilhafterweise das Schwenkelement so ausgebildet, daß es die Werkzeugantriebswelle gabelförmig umgreift.

Insbesondere dann, wenn hohe Drehmomente benötigt werden, ist vorgesehen, daß das Schwenkelement einen Träger aufweist, an weichem der an dem Verbindungsglied angreifende Teil desselben in der durch die Achse der Werkzeugantriebswelle hindurchverlaufenden Ebene beweglich geführt ist, was den Vorteil hat, daß nicht das gesamte Drehmoment über die Befestigung oder die Lagerung des Schwenkelements an der Werkzeugwelle übertragen werden muß.

Ein vorteilhaftes Ausführungsbeispiel sieht vor, daß der an dem Verbindungsglied angreifende Teil des Schwenkelements die Finger beidseitig umgreift, so daß eine Drehmomentübertragung zu beiden Seiten hin möglich ist.

Vorzugsweise ist dabei der Finger so ausgebildet, daß er zu dieser Ebene parallele Führungsflächen aufweist, an welchen der an dem Verbindungsglied angreifende Teil des Schwenkelements geführt ist.

Um ein derartiges Gleiten des an dem Verbindungsglied angreifenden Teils des Schwenkelements ohne große Reibungsverluste zu ermöglichen, ist zweckmäßigerweise vorgesehen, daß sich dieses auf den Führungsflächen des Fingers mit Gleitelementen abstützt.

Diese Gleitelemente sind vorzugsweise Gleitschichten oder können auch Wälzkörper umfassen.

Weitere Merkmale und Vorteile der vorliegenden Erfindung sind Gegenstand der nachfolgenden Beschreibung sowie der zeichnerischen Darstellung einiger Ausführungsbeispiele. In der Zeichnung zeigen:
- Fig. 1: eine teilweise geschnittene perspektivische Gesamtansicht einer ersten Variante der erfindungsgemäßen Lösung;
- Fig. 2: einen Schnitt längs Linie 2-2 in Fig. 1;
- Fig. 3: einen Schnitt längs Linie 3-3 in Fig. 2;
- Fig. 4: einen Schnitt längs Linie 4-4 in Fig. 3 bei einem Ausführungsbeispiel;
- Fig. 5: eine Darstellung ähnlich Fig. 4 bei einem weiteren Ausführungsbeispiel;
- Fig. 6: eine ausschnittweise Darstellung ähnlich Fig. 2 einer zweiten Variante der Erfindung und
- Fig. 7: eine Darstellung ähnlich Fig. 3 der zweiten Variante.

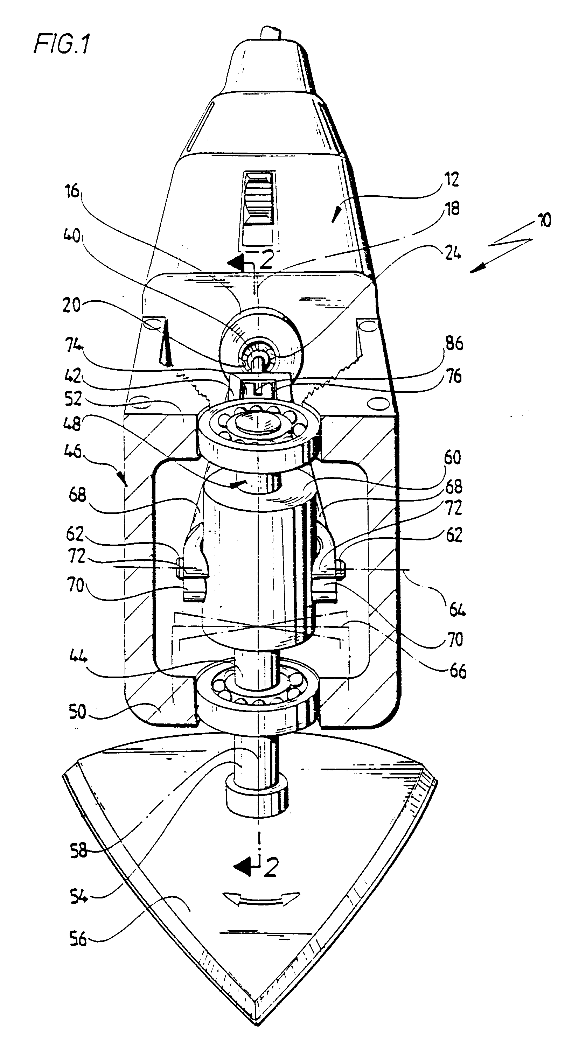

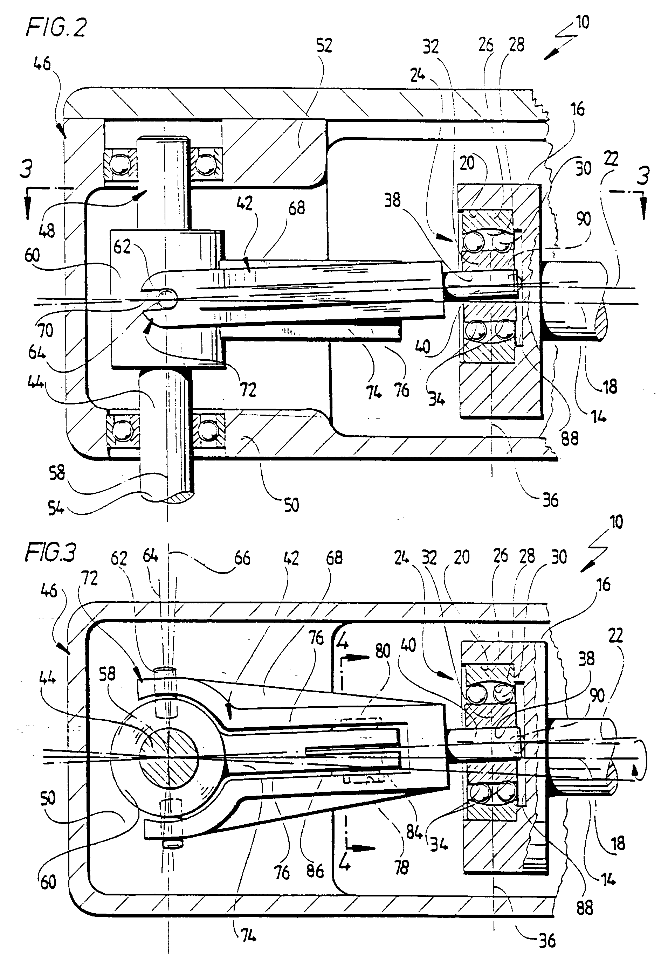

Eine in Fig. 1 als Ganzes mit 10 bezeichnete erste Variante einer ersten Konzeption eines erfindungsgemäßen Oszillationsantriebs umfaßt einen als Ganzes mit 12 bezeichneten Motor, welcher, wie in Fig. 2 und 3 dargestellt, eine Antriebswelle 14 treibt, welche auf ihrem vorderen Ende ein Exzenterrad 16 trägt. Dieses Exzenterrad 16 ist koaxial zu einer Antriebswellenachse 18 angeordnet und weist eine gegenüber der Antriebswellenachse 18 exzentrisch versetzt angeordnete kreiszylindrische Ausnehmung 20 auf, deren Achse 22 parallel zur Antriebswellenachse 18 ausgerichtet ist.

In diese Ausnehmung 20 ist ein Pendellager 24 eingesetzt, welches einen Lageraußenring 26 aufweist, dessen innere Ringflächen 28 in der Art eines ringförmigen Ausschnitts aus einer Hohlkugel geformt sind, so daß auf dieser Ringfläche laufende Wälzkörper 30, die sich ihrerseits auf einem Lagerinnenring 32 in in dessen Außenmantel eingearbeiteten Führungsrinnen 34 abstützen, insgesamt ein Kippen des Lagerinnenrings 32 gegenüber der Achse 22 um einen Kugelmittelpunkt der hohlkugelförmig ausgebildeten inneren Ringfläche 28 des Lageraußenrings 26 erlaubt, welcher auf der Achse 22 liegt. Ein Kippwinkel, bezogen auf die Achse 22, liegt vorzugsweise im Bereich von < 5° , woraus ein maximaler Kippbereich von < 10° resultiert.

Vorzugsweise liegt der Kugelmittelpunkt der inneren Ringfläche 28 im Schnittpunkt einer senkrecht auf der Achse 22 stehenden und eine Symmetrieebene des Pendellagers 24 bildenden Lagerebene 36 mit der Achse 22, so daß die beiden Kippachsen, um welche der Lagerinnenring 32 gegenüber dem Lageraußenring 26 verkippbar ist, in der Lagerebene 36 liegen.

Der Lagerinnenring 32 weist eine in seiner nicht gekippten Stellung mit der Achse 22 koaxiale Aufnahmebohrung 38 auf. In diese greift ein Zapfen 40 eines Arms 42 ein, welcher die zur Antriebswellenachse 18 exzentrischen Bewegungen der Aufnahmebohrung auf eine Werkzeugantriebswelle 44 überträge. Die Werkzeugantriebswelle 44 ist in einem das Exzenterrad 16, den Arm 42 und einen oberen Abschnitt 48 umschließenden Getriebegehäuse 46 zweifach gelagert, nämlich im Bereich eines Unterteils 50 und im Bereich eines Oberteils 52 des Getriebegehäuses 46.

Wie in Fig. 1 dargestellt, erstreckt sich ein unterer Abschnitt 54 der Werkzeugantriebswelle 44 über das Getriebehäuse 46 hinaus und trägt beispielsweise ein Schleifwerkzeug 56. Anstelle dieses Schleifwerkzeugs 56 ist es jedoch ebenfalls denkbar, beispielsweise eine Schneidklinge gemäß dem europäischen Patent 0 174 427 einzusetzen.

Vorzugsweise ist die Werkzeugantriebswelle 44 so angeordnet, daß deren Achse 58 senkrecht auf der Antriebswellenachse 18 steht und diese schneidet.

Im oberen Abschnitt 48 der Werkzeugantriebswelle ist ein diese umschließender Lagerblock 60 vorgesehen, welcher zwei in entgegengesetzte Richtungen von diesem abstehende Lagerzapfen 62 trägt, die eine die Achse 58 schneidende und vorzugsweise senkrecht auf dieser stehende Schwenkachse 64 bilden, um welche der Arm 42 verschwenkbar ist.

Der Lagerblock 60 und der Arm 42 bilden somit ein Schwenkelement, wobei der Arm 42 einen an dem Pendellager 24 als Verbindungsglied angreifenden Teil des Schwenkelements darstellt. Der Abstand der Achse 58 von der Aufnahmebohrung 38 und die Exzentrizität derselben, d.h. deren Abstand von der Antriebswellenachse, sind dabei so bemessen, daß bei rotierendem Exzenterrad 16 an dem Pendellager 24 Kippwinkel von < 5° auftreten.

Besonders bevorzugt ist eine Lösung, bei welcher die Schwenkachse 64 sowohl die Achse 58 als auch die Antriebswellenachse 18 in deren Schnittpunkt schneidet und so ausgerichtet ist, daß die oszillierenden Bewegungen der Werkzeugantriebswelle 44 symmetrisch zu einer senkrecht auf der Antriebswellenachse 18 stehenden und durch die Achse 58 hindurchverlaufenden Mittelebene 66 erfolgende Bewegungen der Schwenkachse 64 bewirken.

Erfindungsgemäß ist bei der ersten Varianten, dargestellt in den Fig. 2 und 3, der Arm 42 gabelförmig ausgebildet, so daß jeweils ein Schenkel 68 des Arms 42 zu einem der Lagerzapfen 62 reicht. Im einfachsten Fall haben die Schenkel keine den Lagerzapfen 62 vollkommen umschließende Lagerbohrung, sondern lediglich eine den jeweiligen Lagerzapfen 62 U-förmig umgreifende Aussparung 70, welche zu einem dem Zapfen 40 gegenüberliegenden Ende 72 des jeweiligen Schenkels 68 hin offen ist.

Zwischen den beiden Schenkein 68 des Arms 42 erstreckt sich ein an den Lagerblock 60 angeformter Finger 74, welcher auf einander gegenüberliegenden Seiten jeweils eine dem jeweiligen Schenkel 68 zugewandte Führungsfläche 76 aufweist, an welchem der jeweilige Schenkel 68 des Arms 42 geführt ist.

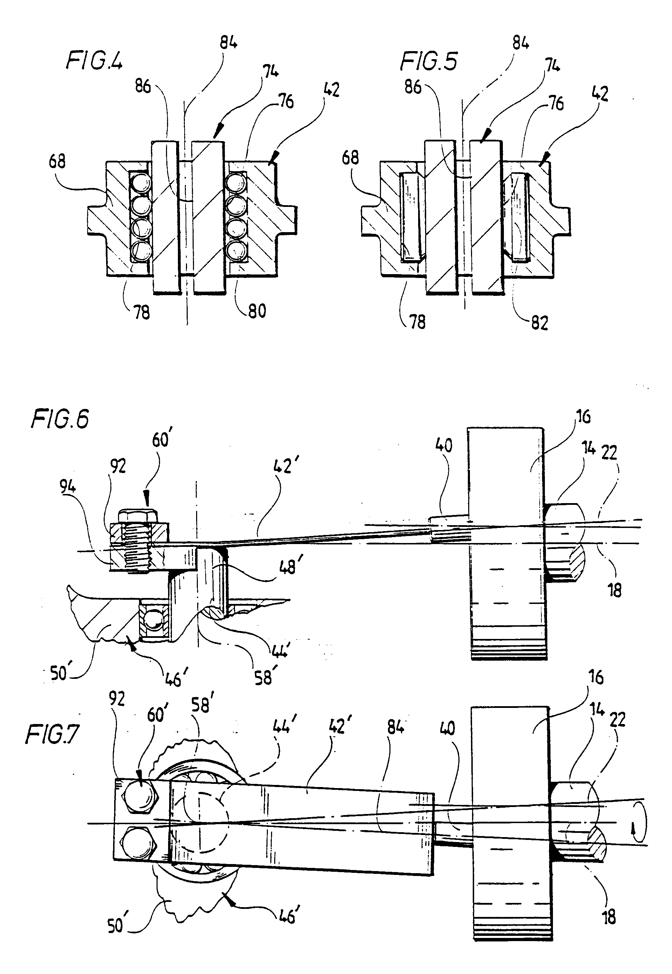

Vorzugsweise sind, wie in den Fig. 4 und 5 dargestellt, in einem dem Zapfen 40 zugewandten Endbereich im Bereich der Führungsflächen 76 auf diesen Führungsflächen 76 aufliegende Gleitelemente vorgesehen, welche entweder in Ausnehmungen 78 der Schenkel 68 gehaltene Wälzkörper 80 oder in diesen Ausnehmungen 78 gehaltene Gleitkörper 82 sein können, wobei die Gleitkörper 82 vorzugsweise aus Teflon hergestellt sind. Es ist aber auch denkbar, zwischen dem Finger 74 und den Schenkeln 68 andere Flachbahnführungen vorzusehen.

Zweckmäßigerweise ist die Anordnung des Fingers 74 und des Zapfens 40 so gewählt, daß diese symmetrisch zu einer durch die Achse 58 der Werkzeugantriebswelle hindurchgehende Symmetrieebene 84 ausgebildet sind, wobei die Symmetrieebene 84 gemeinsam mit dem Arm 42 und dem Finger 74 hinund heroszilliert.

Um eine exakte Führung zwischen den Schenkeln 68 und dem Finger 74 zu erreichen, ist es vorteilhaft, wenn die Wälzkörper 80 oder die Gleitkörper 82 mit einer bestimmten Kraft vorgespannt sind, so daß kein Spiel zwischen dem Finger 74 und dem Schenkel 68 besteht. Zu diesem Zweck ist der Finger 74 mit einem diesen parallel zur Symmetrieebene 84 durchsetzenden Schlitz 86 versehen, der dem Finger senkrecht zu der Symmetrieebene 84 eine Querelastizität verleiht, so daß dieser als elastischer Kraftspeicher zur Beaufschlagung der Wälzkörper 80 oder der Gleitkörper 82 dienen kann. Vorteilhafterweise ist auch der Schlitz 86 symmetrisch zur Symmetrieebene 84 ausgebildet.

Um die Möglichkeit zu schaffen, daß sich der Zapfen 40 an einem senkrecht zur Achse 22 verlaufenden Boden 88 der Ausnehmung 20 abstützen kann, ist ein diesem Boden 88 zugewandtes Ende des Zapfens 40 mit einer Kugel 90 versehen, welche lose in einer entsprechenden Ausnehmung des Zapfens 40 liegt, so daß sich die Kugel 90 auf dem Boden 88 abrollen kann.

Eine gegenüber der ersten Variante vereinfachte zweite Variante, dargestellt in den Fig. 6 und 7, ist insoweit als dieselben Teile Verwendung finden, mit denselben Bezugszeichen versehen, so daß diesbezüglich auf die Ausführungen zur ersten Variante Bezug genommen wird.

Bei diesem zweiten Ausführungsbeispiel erstreckt sich die Werkzeugantriebswelle 44' nicht durch das Getriebegehäuse 46' hindurch, sondern ist lediglich im Bereich des Unterteils 50' gelagert, wobei der obere Abschnitt 48' ein in das Getriebegehäuse 46' hineinragender Wellenstummel ist.

Darüberhinaus ist der Arm 42' im Gegensatz zur ersten Variante nicht aus starrem Material, sondern aus Material, welches in Richtung parallel zur Achse 58' der Werkzeugantriebswelle 44' auf und ab federn kann, so daß der Zapfen 40 in der Symmetrieebene 84 auf- und abschwenkbar ist, während zwischen dem Zapfen 40 und dem oberen Abschnitt 48' der Werkzeugantriebswelle 44' in Richtung senkrecht zur Symmetrieebene 84 eine starre Verbindung beseht.

Hierfür ist der Arm 42' vorzugsweise aus einem Federplättchen gebildet, welches in Richtung senkrecht zur Symmetrieebene eine wesentlich größere Breitenausdehnung als in seiner parallel zur Symmetrieebene 84 gemessenen Dicke hat.

Darüberhinaus ist, um im wesentlichen eine Bewegung des Zapfens 40 auf einer Kegelbahn zu gewährleisten, das den Arm 42' bildende Federplättchen auf einer dem Exzenterrad 16 entgegengesetzten Seite des oberen Abschnitts 48' der Werkzeugantriebswelle 44' zwischen zwei den Lagerblock 60' bildenden Klemmstücken 92 und 94 eingespannt, wobei das Klemmstück 94 fest an dem oberen Abschnitt 48' der Werkzeugantriebswelle 44' gehalten ist.

## Patentansprüche

1. Oszillationsantrieb für Werkzeuge mit einer Antriebswelle (14), mit einem auf der Antriebswelle (14) sitzenden Oszillationsantriebselement, mit einer mit ihrer Achse quer zur Antriebswelle (14) ausgerichteten Abtriebswelle (44), mit einem sich von der Abtriebswelle (44) in Richtung des Oszillationsantriebselements erstreckenden Schwenkelement, wobei das Oszillationsantriebselement einen Exzenter (16) aufweist, welcher über ein Verbindungsglied (24), umfassend ein Drehlager, kombiniert mit einem bezüglich einer Drehachse (22) desselben allseitig kippbaren Kippgelenk, mit dem Schwenkelement (42, 60) verbunden ist, wobei ein an dem Verbindungsglied (24) angreifender Teil (42) des Schwenkelements (42, 60) mit einer in einer durch die Achse (58) der Abtriebswelle (44) hindurch verlaufenden Ebene (84) liegenden Richtungskomponente schwenkbar, im übrigen starr mit der Abtriebswelle (44) verbunden ist, dadurch gekennzeichnet, daß die Antriebswelle (14) von einem Motor (12) angetrieben ist, daß die Abtriebswelle (44) als Werkzeugantriebswelle (44) zum Antrieb eines Werkzeugs ausgebildet ist, und daß das Verbindungsglied (24) ein Pendellager (24) ist, welches an dem Exzenterelement (16) gehalten ist.

2. Oszillationsantrieb nach Anspruch 1, dadurch gekennzeichnet, daß das Kippgelenk einen Kippwinkelbereich von maximal 10° aufweist.

3. Oszillationsantrieb nach einem der voranstehenden Ansprüche, dadurch gekennzeichnet, daß der an dem Verbindungsglied (24) angreifende Teil (42) des Schwenkelements (42, 60) um eine Schwenkachse (64) gelenkig gelagert ist.

4. Oszillationsantrieb nach Anspruch 3, dadurch gekennzeichnet, daß die Schwenkachse (64) die Achse (58) der Werkzeugantriebswelle (44) schneidet.

5. Oszillationsantrieb nach Anspruch 3 oder 4, dadurch gekennzeichnet, daß die Schwenkachse (64) senkrecht auf der Achse (58) der Werkzeugantriebswelle (44) steht.

6. Oszillationsantrieb nach einem der voranstehenden Ansprüche, dadurch gekennzeichnet, daß das Verbindungsglied (24) in einer Ausnehmung (20) des Exzenterelements (16) aufgenommen ist.

7. Oszillationsantrieb nach einem der voranstehenden Ansprüche, dadurch gekennzeichnet, daß das Exzenterelement (16) ein Rad ist.

8. Oszillationsantrieb nach einem der voranstehenden Ansprüche, dadurch gekennzeichnet, daß das Schwenkelement (42, 60) mit einem Zapfen (40) in eine Aufnahme (38) des Verbindungsglieds (24) eingreift.

9. Oszillationsantrieb nach einem der Ansprüche 1 bis 3 und 6 bis 8, dadurch gekennzeichnet, daß das Schwenkelement (42') zumindest teilweise aus in der durch die Achse (58') der Werkzeugantriebswelle (44') hindurch verlaufenden Ebene (84') elastisch beweglichen Material ist.

10. Oszillationsantrieb nach Anspruch 9, dadurch gekennzeichnet, daß das Schwenkelement (92, 94, 42') ein Federstahlplättchen (42') umfaßt.

11. Oszillationsantrieb nach einem der voranstehenden Ansprüche, dadurch gekennzeichnet, daß das Schwenkelement (42, 60) die Werkzeugantriebswelle (44) umgreift.

12. Oszillationsantrieb nach einem der voranstehenden Ansprüche, dadurch gekennzeichnet, daß das Schwenkelement (42, 60) einen Finger (74) aufweist, an welchem der an dem Verbindungsglied (24) angreifende Teil (42) desselben in der durch die Achse (58) der Werkzeugantriebswelle (44) hindurch verlaufenden Ebene (84) beweglich geführt ist.

13. Oszillationsantrieb nach Anspruch 12, dadurch gekennzeichnet, daß der an dem Verbindungsglied (24) angreifende Teil (42) des Schwenkelements den Finger (74) beidseitig umgreift.

14. Oszillationsantrieb nach Anspruch 12 oder 13, dadurch gekennzeichnet, daß der Finger (74) zu dieser Ebene (84) parallele Führungsflächen (76) aufweist, an welchen der an dem Verbindungsglied angreifende Teil (42) des Schwenkelements geführt ist.

15. Oszillationsantrieb nach Anspruch 14, dadurch gekennzeichnet, daß sich der an dem Verbindungsglied (24) angreifende Teil des Schwenkelements auf den Führungsflächen (76) des Fingers (74) mit Gleitelementen (80, 82) abstützt.

## Claims

1. Oscillating drive for tools, with a drive-shaft (14), with an oscillating-drive element seated on the drive-shaft (14), with an output shaft (44) oriented with its axis transverse to the drive-shaft (14), and with a pivoting element extending from the output shaft (44) in the direction of the oscillating-drive element, the oscillating-drive element having an eccentric (16) which is connected to the pivoting element (42, 60) via a connecting member (24) comprising a rotary bearing in combination with a tilting joint tiltable on all sides relative to an axis of rotation (22) of the latter, and a part (42) of the pivoting element (42, 60) which engages on the connecting member (24) being pivotable with a directional component lying in a plane (24) passing through the axis (58) of the output shaft (44) and otherwise being connected rigidly to the output shaft (44), characterised in that the drive-shaft (14) is driven by a motor (12), in that the output shaft (44) is designed as a tool drive-shaft (44) for driving a tool, and in that the connecting member (24) is a self-aligning bearing (24) which is held on the eccentric element (16).

2. Oscillating drive according to Claim 1, characterised in that the tilting joint has a tilt-angle range of a maximum of 10°.

3. Oscillating drive according to one of the preceding claims, characterised in that the part (42) of the pivoting element (42, 60) which engages on the connecting member (24) is mounted in an articulated manner about a pivot axis (64).

4. Oscillating drive according to Claim 3, characterised in that the pivot axis (64) intersects the axis (58) of the tool drive-shaft (44).

5. Oscillating drive according to Claim 3 or 4, characterised in that the pivot axis (64) is perpendicular to the axis (58) of the tool drive-shaft (44).

6. Oscillating drive according to one of the preceding claims, characterised in that the connecting member (24) is received in a recess (20) of the eccentric element (16).

7. Oscillating drive according to one of the preceding claims, characterised in that the eccentric element (16) is a wheel.

8. Oscillating drive according to one of the preceding claims, characterised in that the pivoting element (42, 60) engages with a pin (40) into a receptacle (38) of the connecting member (24).

9. Oscillating drive according to one of Claims 1 to 3 and 6 to 8, characterised in that the pivoting element (42') consists at least partially of a material elastically movable in the plane (84') passing through the axis (58') of the tool drive-shaft (44').

10. Oscillating drive according to Claim 9, characterised in that the pivoting element (92, 94, 42') comprises a spring-steel plate (42').

11. Oscillating drive according to one of the preceding claims, characterised in that the pivoting element (42, 60) engages round the tool drive-shaft (44).

12. Oscillating drive according to one of the preceding claims, characterised in that the pivoting element (42, 60) has a finger (74), on which the part (42) of said pivoting element which engages on the connecting member (24) is guided movably in the plane (84) passing through the axis (58) of the tool drive-shaft (44).

13. Oscillating drive according to Claim 12, characterised in that the part (42) of the pivoting element which engages on the connecting member (24) surrounds the finger (74) on both sides.

14. Oscillating drive according to Claims 12 or 13, characterised in that the finger (74) has guide faces (76) which are parallel to this plane (84) and on which the part (42) of the pivoting element which engages on the connecting member is guided.

15. Oscillating drive according to Claim 14, characterised in that the part of the pivoting element which engages on the connecting member (24) is supported on the guide faces (76) of the finger (74) by means of sliding elements (80, 82).

## Revendications

1. Entraînement oscillant pour outils, comportant un arbre d' entraînement (14), avec un élément d'entraînement oscillant, monté sur l'arbre d'entraînement (14), avec un arbre entraîné (44), orienté, avec son axe, perpendiculairement par rapport à l'arbre d'entraînement (14), avec un élément pivotant, s'étendant depuis l'arbre entraîné (44), en direction de l'élément d'entraînement oscillant, l'élément d'entraînement oscillant présentant un excentrique (16), relié à l'élément pivotant (42, 60) par l'intermédiaire d'un organe de liaison (24), comprenant un palier de rotation combiné à une articulation basculante, susceptible de basculer de tous côtés par rapport un axe de rotation (22) du palier tournant, une partie (42), agissant sur l'organe de liaison (24), de l'élément pivotant (42, 60) étant susceptible de pivoter, avec une composante directionnelle située dans un plan (84) s'étendant en passant par l'axe (58) de l'arbre entraîné (44), pour le reste reliée rigidement à l'arbre entraîné (44), caractérisé en ce que l'arbre d'entraînement (14) est entraîné par un moteur (12), en ce que l'arbre entraîné (44) est réalisé sous forme d'arbre d'entraînement d'outil (44) destiné à l'entraînement d'un outil, et en ce que l'organe de liaison (24) est un palier à rotule (24) maintenu sur l'élément excentrique (16).

2. Entraînement oscillant selon la revendication 1, caractérisé en ce que l'articulation basculante présente une plage angulaire de basculement de 10° au maximum.

3. Entraînement oscillant selon l'une des revendications précédentes, caractérisé en ce que la partie (42), agissant sur l'organe de liaison (24) de l'élément pivotant (42, 60), est montée articulée autour d'un axe de pivotement (64).

4. Entraînement oscillant selon la revendication 3, caractérisé en ce que l'axe de pivotement (64) coupe l'axe (58) de l'arbre d'entraînement d'outil (44).

5. Entraînement oscillant selon la revendication 3 ou 4, caractérisé en ce que l'axe de pivotement (64) est placé perpendiculairement à l'axe (58) de l'arbre d'entraînement d'outil (44).

6. Entraînement oscillant selon l'une quelconque des revendications précédentes, caractérisé en ce que l'organe de liaison (24) est logé dans un évidement (20) de l'élément excentrique (16).

7. Entraînement oscillant selon l'une des revendications précédentes, caractérisé en ce que l'élément excentrique (16) est une roue.

8. Entraînement oscillant selon l'une des revendications précédentes, caractérisé en ce que l'élément pivotant (42, 60) s'engage, par un tourillon (40), dans un logement (38) de l'organe de liaison (24).

9. Entraînement oscillant selon l'une des revendications 1 à 3 et 6 á 8, caractérisé en ce que l'élément pivotant (42') est un matériau déplaçable élastiquement au moins partiellement, à partir du plan (84') passant par l'axe (58') de l'arbre d'entraînement d'outil (44').

10. Entraînement oscillant selon la revendication 9, caractérisé en ce que l'élément pivotant (92, 94, 42') comprend une plaquette en acier à ressort (42').

11. Entraînement oscillant selon l'une des revendications précédentes, caractérisé en ce que l'élément pivotant (42, 60) entoure l'arbre d'entraînement d'outil (44).

12. Entraînement oscillant selon l'une des revendications précédentes, caractérisé en ce que l'élément pivotant (42, 60) présente un doigt (74), sur lequel la partie (42), agissant sur l'organe de liaison (24), de l'élément pivotant est guidée de façon déplaçable dans le plan (84), passant par l'axe (58), de l'arbre d'entraînement d'outil (44).

13. Entraînement oscillant selon la revendication 12, caractérisé en ce que la partie (42), agissant sur l'organe de liaison (24), de l'élément pivotant entoure le doigt (74) des deux côtés.

14. Entraînement oscillant selon la revendication 12 ou 13, caractérisé en ce que le doigt (74) présente des surfaces de guidage (76) parallèles à ce plan (84), sur lesquelles la partie (42), agissant sur l'organe de liaison, de l'élément pivotant est guidée.

15. Entraînement oscillant selon la revendication 14, caractérisé en ce que la partie, agissant sur l'organe de liaison (24), de l'élément pivotant prend appui sur les surfaces de guidage (76) du doigt (74) par des éléments coulissants (80, 82).
